# EUROPEAN PATENT APPLICATION

(11) **EP 4 749 784 A2**
(43) Date of publication of application: **27.05.2026**
(21) Application number: 25209389.3
(22) Date of filing: 17.10.2025
(51) Int. Cl.: H01M 50/204, B60K 1/04, H01M 50/242, H01M 50/249, H01M 50/289, H01M 50/293, H01M 50/502

(54) **POWER STORAGE DEVICE**

(30) Priority: 22.11.2024 JP 2024204055
(71) Applicant: TOYOTA JIDOSHA KABUSHIKI KAISHA, Toyota-shi, Aichi-ken 471-8571 (JP)
(72) Inventor: Tsunekawa, Kunihiro, Toyota-shi, Aichi-ken, 471-8571 (JP); Nakada, Koki, Toyota-shi, Aichi-ken, 471-8571 (JP); Takeshita, Shinya, Toyota-shi, Aichi-ken, 471-8571 (JP); Takahashi, Naoyuki, Toyota-shi, Aichi-ken, 471-8571 (JP); Kimura, Ryo, Toyota-shi, Aichi-ken, 471-8571 (JP); Kato, Kazuhito, Toyota-shi, Aichi-ken, 471-8571 (JP); Shimonaka, Toshihiro, Toyota-shi, Aichi-ken, 471-8571 (JP); Ichisawa, Kota, Toyota-shi, Aichi-ken, 471-8571 (JP); Miyahara, Kenta, Toyota-shi, Aichi-ken, 471-8571 (JP)
(74) Representative: Winter, Brandl - Partnerschaft mbB

(57) **Abstract**

A power storage device (10) includes a first power storage cell (101), a second power storage cell (102) spaced apart from the first power storage cell (101) in a predetermined direction, a third power storage cell (103) spaced apart from the second power storage cell (102) in the predetermined direction, a conductive member (850), a first spacer (701) disposed between the first power storage cell (101) and the second power storage cell (102), and a second spacer (702) disposed between the second power storage cell (102) and the third power storage cell (103). A first terminal (121b) is provided on the side of a lower surface of the first power storage cell (101). A second terminal (122a, 122b) is provided on the side of a lower surface of the second power storage cell (102). A third terminal (123a) is provided on the side of a lower surface of the third power storage cell (103). The conductive member (850) is connected to the first terminal (121b), the second terminal (122a, 122b), and the third terminal (123a).

## Description

### CROSS REFERENCE TO RELATED APPLICATIONS

This non-provisional application is based on Japanese Patent Application No. 2024-204055 filed on November 22, 2024 with the Japan Patent Office, the entire contents of which are hereby incorporated by reference.

### BACKGROUND

### Field

The present disclosure relates to a power storage device.

### Description of the Background Art

CN 116686151A discloses a battery (power storage device) including a plurality of power storage cells, wherein an electrode terminal of each power storage cell is provided on the side of a lower surface of each power storage cell.

### SUMMARY

When an impact is applied to the power storage device in which the electrode terminal is provided on the side of a lower surface of each power storage cell, a connection failure may occur in the electrode terminal.

An object of the present disclosure is to provide a power storage device which prevents a connection failure from occurring in an electrode terminal which is provided on the side of a lower surface of a power storage cell when an impact is applied to the power storage device.
(1) The power storage device according to an aspect of the present disclosure includes: a first power storage cell; a second power storage cell spaced apart from the first power storage cell in a predetermined direction; a third power storage cell spaced apart from the second power storage cell in the predetermined direction; a conductive member; a first spacer disposed between the first power storage cell and the second power storage cell; and a second spacer disposed between the second power storage cell and the third power storage cell. A first terminal is provided on the side of a lower surface of the first power storage cell. A second terminal is provided on the side of a lower surface of the second power storage cell. A third terminal is provided on the side of a lower surface of the third power storage cell. The conductive member is connected to the first terminal, the second terminal and the third terminal.
(2) The power storage device according to (1) further includes an accommodation case that includes a lower case and an upper cover, and accommodates the first power storage cell, the second power storage cell and the third power storage cell. Each of the first spacer and the second spacer is integrally formed with the upper cover.
(3) The power storage device according to (1) further includes an accommodation case that includes a lower case and an upper cover, and accommodates the first power storage cell, the second power storage cell and the third power storage cell. Each of the first spacer and the second spacer is formed separately from the upper cover.
(4) In the power storage device according to (1), the first spacer and the second spacer are integrally formed.
(5) In the power storage device according to (3) or (4), each of the first spacer and the second spacer is made of an elastic member.
(6) In the power storage device according to any one of (1) to (4), the first spacer is in contact with the first power storage cell and the second power storage cell, and the second spacer is in contact with the second power storage cell and the third power storage cell.
(7) A vehicle according to an aspect of the present disclosure includes the power storage device according to any one of (1) to (4), which is mounted below a floor panel.

The foregoing and other objects, features, aspects and advantages of the present disclosure will become more apparent from the following detailed description of the present disclosure when taken in conjunction with the accompanying drawings.

### BRIEF DESCRIPTION OF THE DRAWINGS

Fig. 1 is a diagram schematically illustrating a vehicle including a power storage device according to an embodiment of the present disclosure.
Fig. 2 is an exploded perspective view schematically illustrating the power storage device illustrated in Fig. 1.
Fig. 3 is a plan view schematically illustrating a state when an upper cover is removed from the power storage device illustrated in Fig. 1.
Fig. 4 is a cross-sectional view taken along line IV-IV in Fig. 3.
Fig. 5 is a cross-sectional view taken along line V-V in Fig. 3.
Fig. 6 is a diagram schematically illustrating a power storage cell, a bus bar, and an electrical insulation plate on which the bus bar is disposed.
Fig. 7 is a bottom view of a power storage stack and each bus bar.
Fig. 8 is a diagram illustrating a spacer according to a first modification.
Fig. 9 is a view illustrating a spacer according to a second modification.

### DESCRIPTION OF THE PREFERRED EMBODIMENTS

Hereinafter, embodiments and modifications of the present disclosure will be described in detail with reference to the drawings. In the drawings, the same or corresponding parts will be denoted by the same reference numerals, and the description thereof will not be repeated.

### [Embodiment]

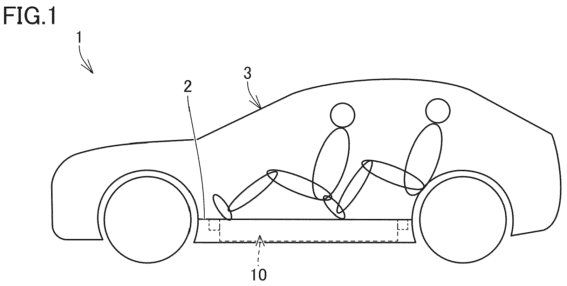

Fig. 1 is a diagram schematically illustrating a vehicle including a power storage device according to an embodiment of the present disclosure. A vehicle 1 includes a vehicle body 3 and a power storage device 10. As an example, the vehicle 1 may be a hybrid electric vehicle, a plug-in hybrid electric vehicle, or a battery electric vehicle. The power storage device 10 is mounted on a bottom portion of the vehicle body 3 (for example, below a floor panel 2).

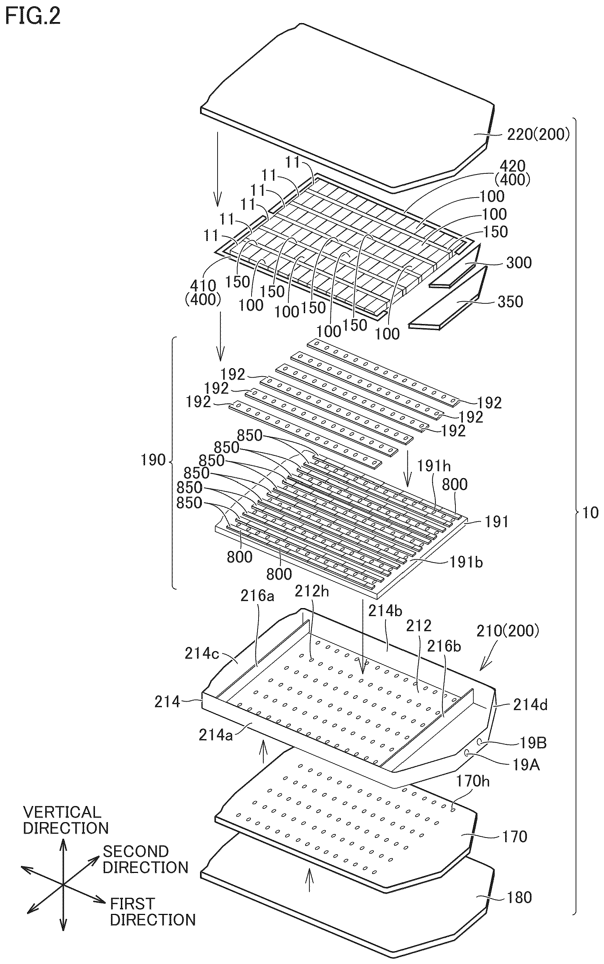

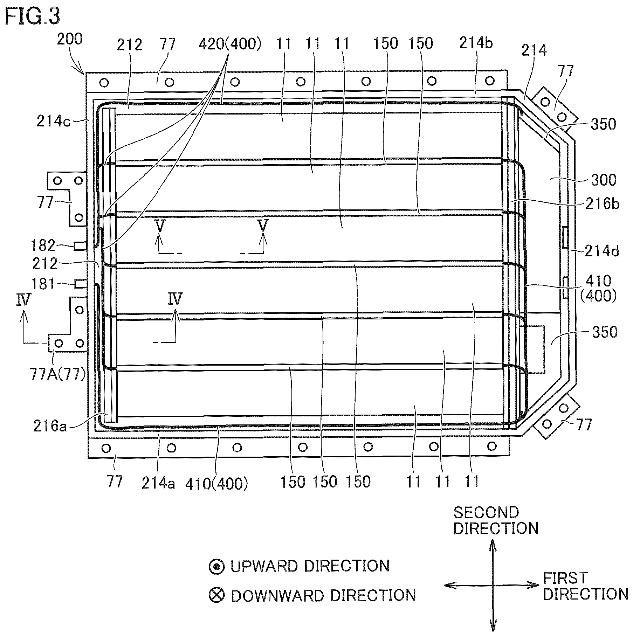

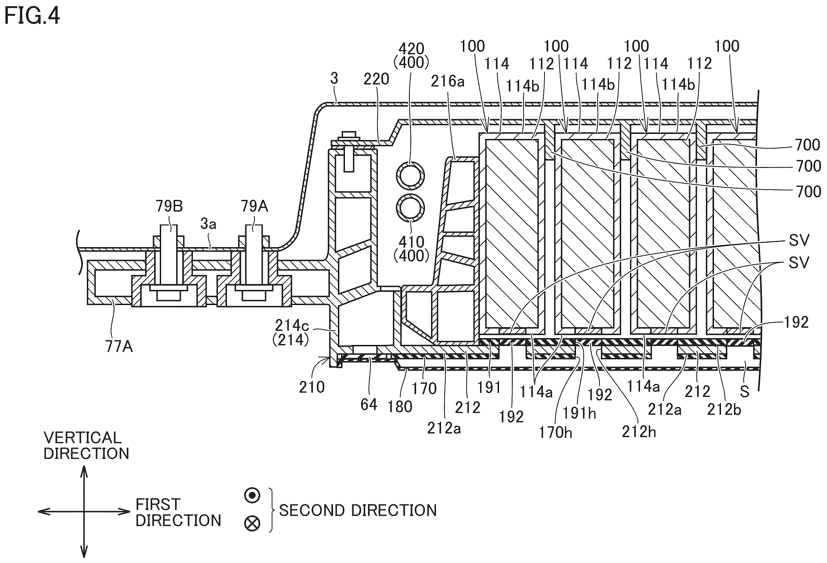

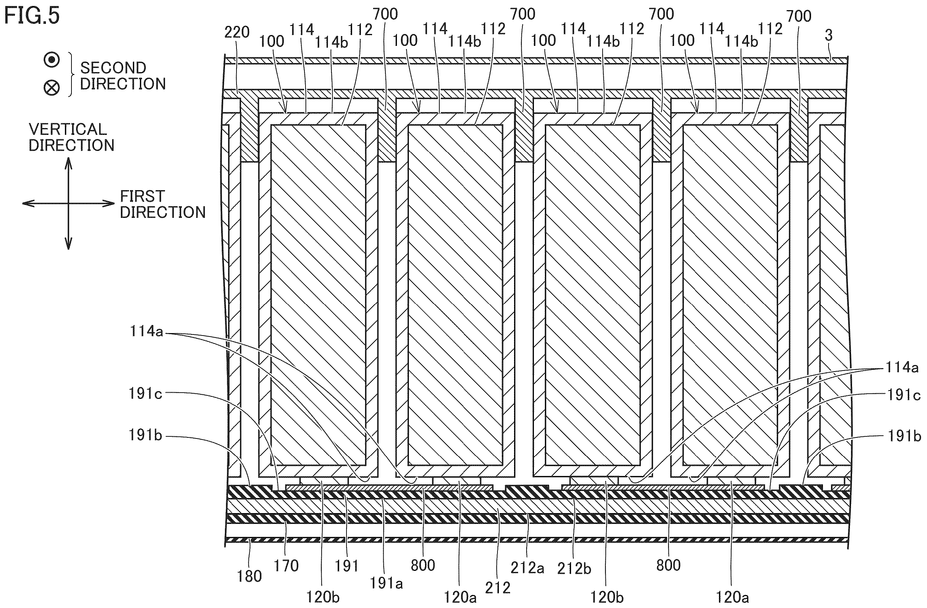

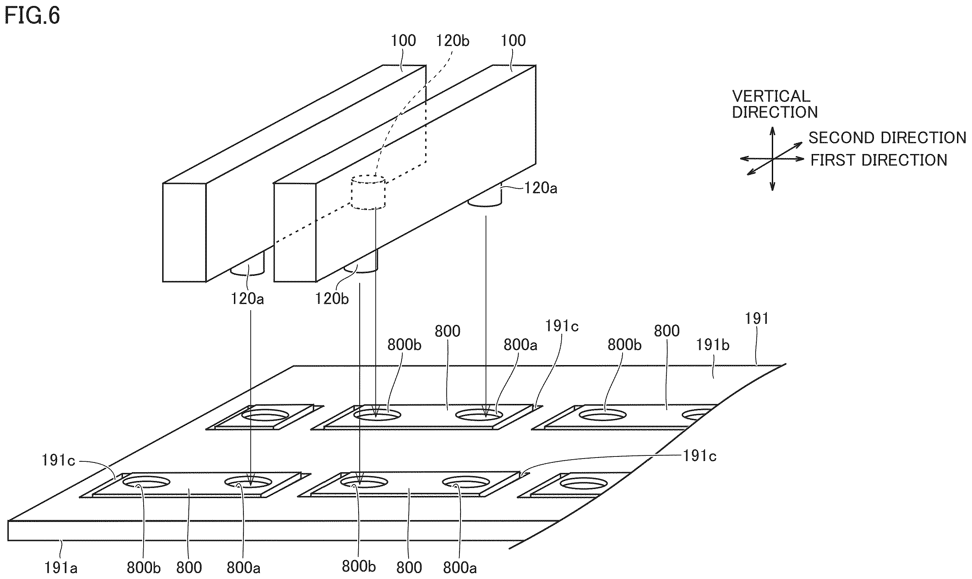

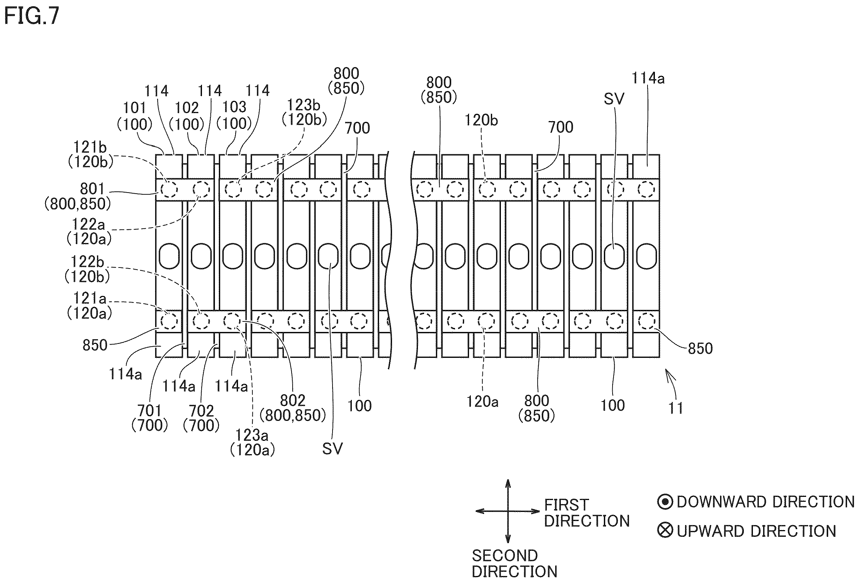

Fig. 2 is an exploded perspective view schematically illustrating the power storage device illustrated in Fig. 1. Fig. 3 is a plan view schematically illustrating a state when an upper cover is removed from the power storage device illustrated in Fig. 1. Fig. 4 is a cross-sectional view taken along line IV-IV in Fig. 3. Fig. 5 is a cross-sectional view taken along line V-V in Fig. 3. Fig. 6 is a diagram schematically illustrating a power storage cell, a bus bar, and an electrical insulation plate on which the bus bar is disposed. Fig. 7 is a bottom view of a power storage stack and each bus bar.

With reference to Fig. 2, the power storage device 10 includes six power storage stacks 11, five cooling plates 150, a housing 200, an electrical insulation plate 170, a panel member 180, a wiring panel 190, equipment 300, an equipment cooler 350, and a refrigerant pipe 400.

The six power storage stacks 11 are disposed on the wiring panel 190. Each power storage stack 11 is formed in a rectangular parallelepiped shape elongated in a first direction. The six power storage stacks 11 are arranged side by side in a second direction intersecting both the first direction and the vertical direction (perpendicular direction). In the present embodiment, the first direction corresponds to the front-rear direction of the vehicle 1, and the second direction corresponds to the width direction of the vehicle 1. In the present embodiment, the second direction is orthogonal to both the first direction and the vertical direction (perpendicular direction). The first direction is not limited to the front-rear direction of the vehicle 1. The second direction is not limited to the width direction of the vehicle 1. The number of the power storage stacks 11 is not limited to six.

Each power storage stack 11 includes a plurality of power storage cells 100. The plurality of power storage cells 100 are arranged side by side in the first direction.

With reference to Figs. 4 and 5, the plurality of power storage cells 100 are spaced apart from each other in the first direction. Each power storage cell 100 includes an electrode body 112 and a cell case 114.

The electrode body 112 may be formed as a wound body which is obtained by winding a positive electrode sheet and a negative electrode sheet with a separator interposed therebetween, or may be formed as a laminated body which is obtained by laminating a positive electrode sheet and a negative electrode sheet with a separator interposed therebetween. The electrode body 112 is formed in a shape elongated in the second direction.

The cell case 114 accommodates the electrode body 112. The cell case 114 is formed in a rectangular parallelepiped shape. The cell case 114 is made of a metal such as aluminum. The cell case 114 includes a lower surface 114a and an upper surface 114b. The lower surface 114a and the upper surface 114b are spaced apart from each other in the vertical direction. The upper surface 114b is disposed above the lower surface 114a.

With reference to Figs. 4 and 7, each power storage cell 100 further includes a cell smoke discharge valve SV. The cell smoke discharge valve SV is provided on the lower surface 114a of the cell case 114. An external terminal 120a (or an external terminal 120b) and a bus bar 800, which will be described later, are not illustrated in Fig. 4. Each power storage cell 100 is disposed in such a manner that the cell smoke discharge valve SV is located above a through hole 191h of an electrical insulation plate 191 illustrated in Fig. 2.

With reference to Figs. 5 and 7, each power storage cell 100 further includes a pair of external terminals 120a and 120b. In the present embodiment, the external terminal 120a is a positive terminal, and the external terminal 120b is a negative terminal. It should be noted that the external terminal 120a may be a negative terminal, and the external terminal 120b may be a positive terminal.

The pair of external terminals 120a and 120b are provided on the lower surface 114a of the cell case 114. The pair of external terminals 120a and 120b are spaced apart from each other in the width direction of the cell case 114. The width direction of the cell case 114 corresponds to the second direction. The pair of external terminals 120a and 120b may not be provided on the lower surface 114a of the cell case 114, and may be provided on the side of the lower surface 114a of the cell case 114.

With reference to Fig. 2, each cooling plate 150 is disposed between a pair of power storage stacks 11 adjacent to each other in the second direction. Each cooling plate 150 is formed in a plate shape elongated in the first direction. Each cooling plate 150 has a flow path (not shown) through which refrigerant flows in the first direction. The number of the cooling plates 150 is not limited to five. The number of the cooling plates 150 is determined in response to the number of the power storage stacks 11.

The housing 200 is an example of "an accommodation case" in the present disclosure. The housing 200 houses the six power storage stacks 11, the five cooling plates 150, the wiring panel 190, the equipment 300, the equipment cooler 350, and the refrigerant pipe 400. The housing 200 includes a lower case 210 and an upper cover 220. The upper cover 220 is disposed above the lower case 210.

The lower case 210 is formed to open upward. The lower case 210 is made of, for example, a metal such as aluminum. The lower case 210 includes a bottom plate 212, a peripheral wall 214, a partition wall 216a, and a partition wall 216b.

The bottom plate 212 is formed in a plate shape. In the present embodiment, the bottom plate 212 is formed in a solid shape. The bottom plate 212 is formed with a plurality of through holes 212h. The bottom plate 212 may be formed in a hollow shape.

With reference to Fig. 5, the bottom plate 212 includes a lower surface 212a and an upper surface 212b. The lower surface 212a and the upper surface 212b are spaced apart from each other in the vertical direction. The upper surface 212b is disposed above the lower surface 212a.

With reference to Fig. 2, the peripheral wall 214 rises from the outer peripheral edge of the bottom plate 212. The peripheral wall 214 is configured to surround the six power storage stacks 11.

With reference to Fig. 3, the peripheral wall 214 includes a side wall 214a, a side wall 214b, an end plate 214c, and an end plate 214d. Each of the side wall 214a, the side wall 214b, the end plate 214c, and the end plate 214d is formed in a hollow shape. Each of the side wall 214a, the side wall 214b, the end plate 214c, and the end plate 214d may be formed in a solid shape.

The side wall 214a and the side wall 214b are spaced apart from each other in the second direction. The side wall 214a and the side wall 214b are formed to extend in the first direction.

The end plate 214c and the end plate 214d are spaced apart from each other in the first direction. The end plate 214c and the end plate 214d are formed to extend in the second direction. The end plate 214c connects one end of the side wall 214a and one end of the side wall 214b. The end plate 214d connects the other end of the side wall 214a and the other end of the side wall 214b.

The end plate 214d is provided with an air-permeable film 19A and an air-permeable film 19B (see Fig. 2). The air-permeable film 19A and the air-permeable film 19B are a waterproof but air-permeable film. Each of the air-permeable film 19A and the air-permeable film 19B is made of, for example, GORE-TEX (registered trademark). In the power storage device 10, when an internal pressure of the housing 200 increases, the gas in the housing 200 is discharged to the outside through the air-permeable films 19A and 19B. When the internal pressure of the housing 200 decreases, the gas outside the housing 200 enters the housing 200 through the air-permeable films 19A and 19B. It should be noted that each of the air-permeable films 19A and 19B may be a cell smoke discharge valve that opens when the internal pressure of the housing 200 becomes equal to or higher than a reference value. The cell smoke discharge valve may be a check valve.

Each of the side wall 214a, the side wall 214b, the end plate 214c, and the end plate 214d is provided with a fixed member 77. Each fixed member 77 is formed in a hollow shape. Each fixed member 77 may be formed in a solid shape.

Each fixed member 77 is fixed to the vehicle body 3 (see Fig. 1). For example, a fixed member 77A is formed on the outer surface of the end plate 214c. With reference to Fig. 4, the fixed member 77A is fixed to the vehicle body 3 by fastening members 79A and 79B. For example, the vehicle body 3 includes side sills spaced apart from each other in the width direction of the vehicle 1 (see Fig. 1), a cross member 3a configured to connect the side sills, and a floor panel 2 (see Fig. 1). The fixed member 77A is fixed to the cross member 3a. The fixed member 77A may be fixed to the floor panel 2.

With reference to Fig. 3, the partition wall 216a and the partition wall 216b are disposed in a region surrounded by the bottom plate 212 and the peripheral wall 214. The partition wall 216a is disposed adjacent to the end plate 214c. The partition wall 216b is spaced apart from the end plate 214d in the first direction. Each of the partition wall 216a and the partition wall 216b is formed to extend in the second direction. The partition wall 216a and the partition wall 216b are configured to restrain the power storage stacks 11 from both sides thereof in the first direction.
Each of the partition wall 216a and the partition wall 216b is formed in a hollow shape. It should be noted that each of the partition wall 216a and the partition wall 216b may be formed in a solid shape.

With reference to Fig. 4, the upper cover 220 is provided to close an opening of the lower case 210. For example, the outer peripheral edge of the upper cover 220 is fixed to the upper end of the end plate 214c by bolts or the like.

With reference to Fig. 2, the six power storage stacks 11, the five cooling plates 150, the wiring panel 190, the equipment 300, the equipment cooler 350, and the refrigerant pipe 400 are accommodated in a space formed by the lower case 210 and the upper cover 220.

The electrical insulation plate 170 is made of an electrical insulation member (for example, a resin composition). The electrical insulation plate 170 is formed in a plate shape, for example. The electrical insulation plate 170 is formed with a plurality of through holes 170h. The electrical insulation plate 170 is disposed between the panel member 180 and the bottom plate 212 of the lower case 210. With reference to Fig. 4, the electrical insulation plate 170 is fixed to the lower surface 212a of the bottom plate 212.

With reference to Fig. 2, the panel member 180 is configured to protect the bottom plate 212 of the lower case 210. The panel member 180 is formed to cover the electrical insulation plate 170 and the lower surface 212a of the bottom plate 212.

The panel member 180 is formed in a plate shape, for example. With reference to Fig. 4, a seal member 64 is disposed between the outer peripheral edge of the panel member 180 and the lower surface 212a of the bottom plate 212. The outer peripheral edge of the panel member 180 is fixed to the lower surface 212a of the bottom plate 212 with the seal member 64 interposed therebetween.

With reference to Fig. 2, the wiring panel 190 includes an electrical insulation plate 191, a plurality of conductive members 850, and a plurality of electrical insulation protectors 192. The electrical insulation plate 191 is made of an electrical insulation member (for example, a resin composition). The electrical insulation plate 191 is formed in a plate shape, for example. The electrical insulation plate 191 is disposed on a portion of the upper surface 212b (see Fig. 4) of the bottom plate 212 of the lower case 210 located between the partition wall 216a and the partition wall 216b.

The electrical insulation plate 191 is formed with a plurality of through holes 191h. The electrical insulation plate 191 is provided with an electrical insulation protector 192 that closes the through hole 191h. The electrical insulation protector 192 is made of a heat-resistant member (such as mica).

The conductive member 850 is connected to the external terminals 120a and the external terminals 120b (see Fig. 7) of the plurality of power storage cells 100 included in the power storage stack 11. The conductive member 850 is a so-called bus bar module, and includes a plurality of bus bars 800. The plurality of power storage cells 100 included in the power storage stack 11 are electrically connected to each other by the plurality of bus bars 800.

With reference to Figs. 5 and 6, the electrical insulation plate 191 includes a lower surface 191a and an upper surface 191b. The lower surface 191a and the upper surface 191b are spaced apart from each other in the vertical direction. The upper surface 191b is disposed above the lower surface 191a. The upper surface 191b is formed with a groove 191c in which the bus bar 800 is disposed.

The bus bar 800 is disposed in the groove 191c formed on the upper surface 191b of the electrical insulation plate 191. The bus bar 800 is joined to the electrical insulation plate 191. The bus bar 800 may be fitted into the groove 191c.

With reference to Figs. 6 and 7, the bus bar 800 electrically connects a pair of power storage cells 100 adjacent to each other in the first direction. As illustrated in Fig. 6, the bus bar 800 is formed with a groove 800a and a groove 800b. The external terminal 120a provided on one of the pair of power storage cells 100 adjacent to each other in the first direction is connected to the groove 800a. The external terminal 120b provided on the other one of the pair of power storage cells 100 is connected to the groove 800b. In other words, the bus bar 800 connects the external terminal 120a provided on one of the pair of power storage cells 100 adjacent to each other in the first direction and the external terminal 120b provided on the other one of the pair of power storage cells 100. Therefore, the plurality of power storage cells 100 arranged side by side in the first direction are connected in series by the plurality of bus bars 800.

The external terminal 120a provided on one of the pair of power storage cells 100 adjacent to each other in the first direction is connected to the groove 800a, and the external terminal 120b provided on the other one of the pair of power storage cells 100 is connected to the groove 800b, whereby the plurality of power storage cells 100 can be easily connected in series. The bus bar 800 may electrically connect two power storage cells among the plurality of power storage cells 100 included in the power storage stack 11, and the two power storage cells 100 electrically connected by the bus bar 800 are not limited to a pair of power storage cells 100 adjacent to each other in the first direction.

With reference to Fig. 4, a space S is formed between the panel member 180 and the bottom plate 212. The space S functions as a smoke discharge path for discharging the gas discharged from the cell smoke discharge valve SV of the power storage cell 100 to the outside of the housing 200.

The through hole 191h, the through hole 212h, and the through hole 170h are arranged in the vertical direction. The cell smoke discharge valve SV is disposed above the through hole 191h. In other words, the through hole 191h, the through hole 212h, and the through hole 170h are provided at a position facing the cell smoke discharge valve SV. The electrical insulation protector 192 that closes the through hole 191h is also provided at a position facing the cell smoke discharge valve SV. When the gas is discharged from the cell smoke discharge valve SV, a hole is formed in the electrical insulation protector 192 located below the cell smoke discharge valve SV, and the hole functions as a gas path. Since the through hole 191h, the through hole 212h, and the through hole 170h are provided at a position facing the cell smoke discharge valve SV, when the gas is discharged from the cell smoke discharge valve SV, the gas flows into the space S through the through hole 191h, the through hole 212h and the through hole 170h. The space S extends to the end plate 214d illustrated in Fig. 3.

When the gas is discharged from any of the power storage cells 100, the gas flows through the space S in the first direction and is discharged to the outside of the housing 200 through the air-permeable films 19A and 19B illustrated in Fig. 2.

With reference to Figs. 2 and 3, the equipment 300 is provided between the partition wall 216b and the end plate 214d. The equipment 300 may include a junction box. The equipment 300 may include relays, control instruments, and the like.

The equipment cooler 350 cools the equipment 300. The equipment cooler 350 is provided between the bottom plate 212 and the equipment 300. A thermally conductive adhesive agent may be provided between the equipment cooler 350 and the bottom plate 212.

With reference to Fig. 2, the refrigerant pipe 400 is a pipe through which refrigerant (water, oil, or the like) flows. The refrigerant pipe 400 includes an upstream pipe 410 and a downstream pipe 420. With reference to Fig. 3, the end plate 214c of the peripheral wall 214 is provided with an inflow port 181 and an outflow port 182.

The upstream end of the upstream pipe 410 is connected to the inflow port 181. The upstream pipe 410 has six downstream ends. One of the downstream ends of the upstream pipe 410 is connected to the equipment cooler 350. Each of the remaining downstream ends of the upstream pipe 410 is connected to the cooling plate 150. The downstream pipe 420 has six upstream ends. One of the upstream ends of the downstream pipe 420 is connected to the equipment cooler 350. Each of the remaining upstream ends of the downstream pipe 420 is connected to the cooling plate 150. The downstream end of the downstream pipe 420 is connected to the outflow port 182. The refrigerant supplied from the inflow port 181 flows into the cooling plate 150 and the equipment cooler 350 through the upstream pipe 410, cools the power storage cell 100 (see Fig. 2) and the equipment 300, and then flows out from the outflow port 182 through the downstream pipe 420.

With reference to Fig. 5, the power storage device 10 further includes a plurality of spacers 700. Each spacer 700 is disposed between a pair of power storage cells 100 adjacent to each other in the first direction. Each spacer 700 is in contact with a pair of power storage cells 100 adjacent to each other in the first direction. Each spacer 700 is formed in a rectangular shape elongated in the second direction. Each spacer 700 is integrally formed with the upper cover 220.

With reference to Fig. 7, the power storage stack 11 includes a plurality of power storage cells 100. The plurality of power storage cells 100 are arranged side by side in the first direction. The plurality of power storage cells 100 include a first power storage cell 101, a second power storage cell 102, and a third power storage cell 103. The first power storage cell 101, the second power storage cell 102 and the third power storage cell 103 are examples of three power storage cells 100 adjacent to each other among the plurality of power storage cells 100.

The second power storage cell 102 is spaced apart from the first power storage cell 101 in a predetermined direction. The third power storage cell 103 is spaced apart from the second power storage cell 102 in the predetermined direction. The predetermined direction corresponds to one direction of the first direction. In the present embodiment, the predetermined direction corresponds to a direction from the front side of the vehicle 1 toward the rear side of the vehicle 1. The predetermined direction is not limited to a direction from the front side of the vehicle 1 toward the rear side of the vehicle 1. For example, the predetermined direction may be a direction from the rear side of the vehicle 1 toward the front side of the vehicle 1.

The first power storage cell 101 includes a pair of external terminals 121a and 121b. The pair of external terminals 121a and 121b is an example of the pair of external terminals 120a and 120b provided in the first power storage cell 101. The pair of external terminals 121a and 121b are provided on the lower surface 114a of the cell case 114 of the first power storage cell 101. The pair of external terminals 121a and 121b are spaced apart from each other in the width direction (in other words, the second direction) of the cell case 114 of the first power storage cell 101. The external terminal 121b is an example of "a first terminal" in the present disclosure. The pair of external terminals 121a and 121b may not be provided on the lower surface 114a of the first power storage cell 101, and may be provided on the side of the lower surface 114a of the first power storage cell 101.

The second power storage cell 102 includes a pair of external terminals 122a and 122b. The pair of external terminals 122a and 122b is an example of the pair of external terminals 120a and 120b provided in the second power storage cell 102. The pair of external terminals 122a and 122b are provided on the lower surface 114a of the cell case 114 of the second power storage cell 102. The pair of external terminals 122a and 122b are spaced apart from each other in the width direction (in other words, the second direction) of the cell case 114 of the second power storage cell 102. Each of the external terminal 122a and the external terminal 122b is an example of "a second terminal" in the present disclosure. The pair of external terminals 122a and 122b may not be provided on the lower surface 114a of the second power storage cell 102, and may be provided on the side of the lower surface 114a of the second power storage cell 102.

The third power storage cell 103 includes a pair of external terminals 123a and 123b. The pair of external terminals 123a and 123b is an example of the pair of external terminals 120a and 120b provided in the third power storage cell 103. The pair of external terminals 123a and 123b is provided on the lower surface 114a of the cell case 114 of the third power storage cell 103. The pair of external terminals 123a and 123b are spaced apart from each other in the width direction (in other words, the second direction) of the cell case 114 of the third power storage cell 103. The external terminal 123a is an example of "a third terminal" in the present disclosure. The pair of external terminals 123a and 123b may not be provided on the lower surface 114a of the third power storage cell 103, and may be provided on the side of the lower surface 114a of the third power storage cell 103.

**In** the present embodiment, the external terminals 121a, 122a, and 123a are positive terminals, and the external terminals 121b, 122b, and 123b are negative terminals. However, the external terminals 121a, 122a, and 123a may be negative terminals, and the external terminals 121b, 122b, and 123b may be positive terminals.

The conductive member 850 is connected to, for example, the external terminal 121b, 122a, 122b and 123a. More specifically, the conductive member 850 includes a first bus bar 801 and a second bus bar 802. The first bus bar 801 corresponds to the bus bar 800 that connects the external terminal 121b and the external terminal 122a. The second power storage cell 102 is electrically connected to the first power storage cell 101 by the first bus bar 801. The second bus bar 802 corresponds to the bus bar 800 that connects the external terminal 122b and the external terminal 123a. The second power storage cell 102 is electrically connected to the third power storage cell 103 by the second bus bar 802.

The plurality of spacers 700 mentioned above include a first spacer 701 and a second spacer 702. The first spacer 701 corresponds to the spacer 700 disposed between the first power storage cell 101 and the second power storage cell 102. The first spacer 701 is in contact with the first power storage cell 101 and the second power storage cell 102. The second spacer 702 corresponds to the spacer 700 disposed between the second power storage cell 102 and the third power storage cell 103. The second spacer 702 is in contact with the second power storage cell 102 and the third power storage cell 103.

The first spacer 701 is disposed on one side of the second power storage cell 102 in the first direction, and the second spacer 702 is disposed on the other side of the second power storage cell 102 in the first direction. Thus, when an impact is applied to the power storage device 10 from a predetermined direction or a direction opposite to the predetermined direction, the second power storage cell 102 is prevented from being moved in the predetermined direction or a direction opposite to the predetermined direction. Therefore, the external terminals 121b, 122a, 122b and 123a are less likely to be detached from the conductive member 850. For example, the external terminal 121b and the external terminal 122a are less likely to be detached from the first bus bar 801, and the external terminal 122b and the external terminal 123a are less likely to be detached from the second bus bar 802. Therefore, when an impact is applied to the power storage device 10 from a predetermined direction or a direction opposite to the predetermined direction, a connection failure is prevented from occurring in the electrode terminal. Since a connection failure is prevented from occurring in the electrode terminal, a short circuit is prevented from being caused by the connection failure.

As described above, the power storage device 10 according to the present embodiment includes a first power storage cell 101, a second power storage cell 102 spaced apart from the first power storage cell 101 in the predetermined direction, a third power storage cell 103 spaced apart from the second power storage cell 102 in the predetermined direction, and a conductive member 850. The power storage device 10 further includes a first spacer 701 disposed between the first power storage cell 101 and the second power storage cell 102, and a second spacer 702 disposed between the second power storage cell 102 and the third power storage cell 103. An external terminal 121b is provided on the side of the lower surface 114a of the first power storage cell 101. External terminals 122a and 122b are provided on the side of the lower surface 114a of the second power storage cell 102. An external terminal 123a is provided on the side of the lower surface 114a of the third power storage cell 103. The conductive member 850 is connected to the external terminal 121b, 122a, 122b and 123a. Thus, when an impact is applied to the power storage device 10 from the predetermined direction or a direction opposite to the predetermined direction, the second power storage cell 102 is prevented from being moved in the predetermined direction or a direction opposite to the predetermined direction. Therefore, the external terminals 121b, 122a, 122b and 123a are less likely to be detached from the conductive member 850. Therefore, according to the power storage device 10 of the present embodiment, when an impact is applied to the power storage device 10 from a predetermined direction or a direction opposite to the predetermined direction, a connection failure is prevented from occurring in the electrode terminal.

In general, in a vehicle in which the power storage device is mounted below a floor panel, if the front side of the power storage device comes into contact with an obstacle on a road surface during traveling, the power storage cell may be moved in a predetermined direction or in a direction opposite to the predetermined direction, which may detach the external terminal of the power storage cell from the conductive member. However, according to the present embodiment, even when the power storage device 10 comes into contact with an obstacle on a road surface, the power storage cell 100 is prevented from being moved in a predetermined direction or a direction opposite to the predetermined direction by the first spacer 701 and the second spacer 702, and thereby, the external terminals 120a and 120b are less likely to be detached from the conductive member 850. Therefore, according to the vehicle 1 of the present embodiment, a connection failure is prevented from occurring in the electrode terminal.

Each spacer 700 is formed integrally with the upper cover 220. In other words, each of the first spacer 701 and the second spacer 702 is integrally formed with the upper cover 220. As a result, the number of components constituting the power storage device 10 is reduced. Therefore, according to the power storage device 10 of the present embodiment, the ease of assembly of the power storage device 10 is improved. When each of the first spacer 701 and the second spacer 702 is integrally formed with the upper cover 220, and when the first spacer 701, the second spacer 702 and the upper cover 220 are made of resin, the first spacer 701, the second spacer 702 and the upper cover 220 may be manufactured as a single component by resin molding, which simplifies the manufacturing process.

Each spacer 700 is in contact with a pair of power storage cells 100 adjacent to each other in the first direction. In other words, the first spacer 701 is in contact with the first power storage cell 101 and the second power storage cell 102, and the second spacer 702 is in contact with the second power storage cell 102 and the third power storage cell 103. Thus, when an impact is applied to the power storage device 10 from a predetermined direction or a direction opposite to the predetermined direction, the second power storage cell 102 is prevented from being moved in the predetermined direction or a direction opposite to the predetermined direction.

### [First Modification]

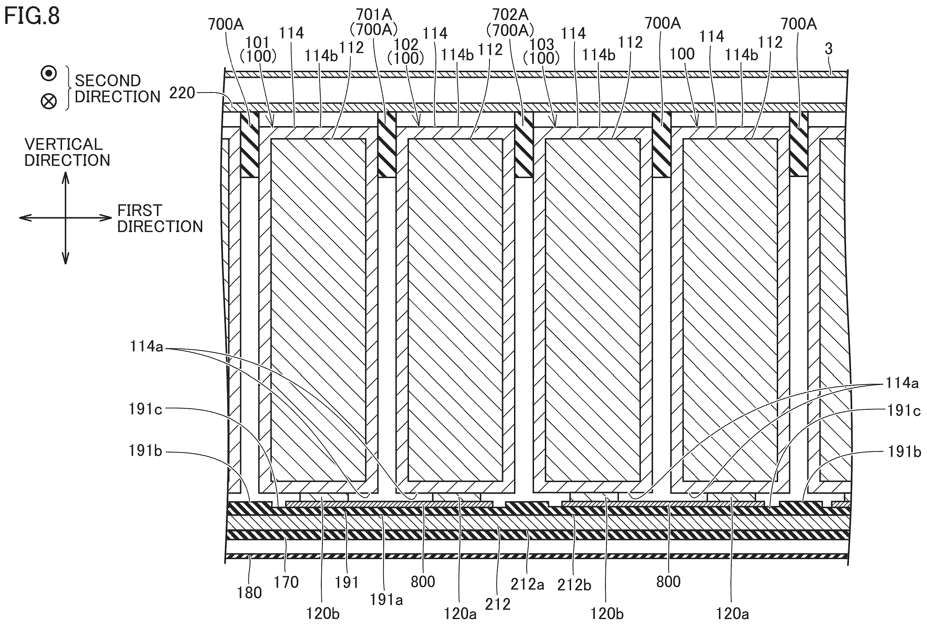

Fig. 8 is a diagram illustrating a spacer according to a first modification. In the above embodiment, the power storage device 10 includes a plurality of spacers 700. However, in the first modification, the power storage device 10 includes a plurality of spacers 700A instead of the plurality of spacers 700.

The plurality of spacers 700A include a first spacer 701A and a second spacer 702A. The first spacer 701A corresponds to the spacer 700A disposed between the first power storage cell 101 and the second power storage cell 102. The second spacer 702A corresponds to the spacer 700A disposed between the second power storage cell 102 and the third power storage cell 103. Each spacer 700A is in contact with a pair of power storage cells 100 adjacent to each other in the first direction. In other words, the first spacer 701A is in contact with the first power storage cell 101 and the second power storage cell 102, and the second spacer 702A is in contact with the second power storage cell 102 and the third power storage cell 103.

The spacer 700A is different from the spacer 700 in that each spacer 700A is formed separately from the upper cover 220. In other words, each of the first spacer 701A and the second spacer 702A is formed separately from the upper cover 220. Each spacer 700A is fixed to the upper cover 220.

Each spacer 700A may be made of an elastic member. In other words, each of the first spacer 701A and the second spacer 702A may be made of an elastic member.

The spacer 700A is the same as the spacer 700 in the other points. Since each of the first spacer 701A and the second spacer 702A is formed separately from the upper cover 220, the first spacer 701A and the second spacer 702A may be made of a member different from the upper cover 220.

When each spacer 700A is made of an elastic member, the power storage cell 100 adjacent to the spacer 700A is prevented from being damaged. In other words, the first power storage cell 101 and the second power storage cell 102 adjacent to the first spacer 701A is prevented from being damaged, and the second power storage cell 102 and the third power storage cell 103 adjacent to the second spacer 702A is prevented from being damaged.

### [Second Modification]

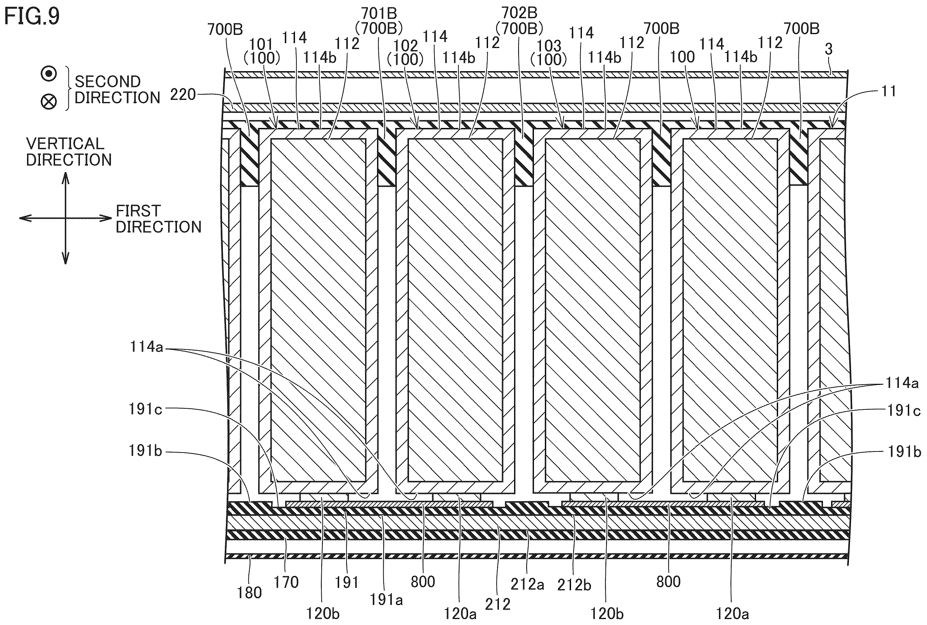

Fig. 9 is a view illustrating a spacer according to a second modification. In the above embodiment, the power storage device 10 includes a plurality of spacers 700. However, in the second modification, the power storage device 10 includes a plurality of spacers 700B instead of the plurality of spacers 700.

The plurality of spacers 700B include a first spacer 701B and a second spacer 702B. The first spacer 701B corresponds to the spacer 700B disposed between the first power storage cell 101 and the second power storage cell 102. The second spacer 702B corresponds to the spacer 700B disposed between the second power storage cell 102 and the third power storage cell 103. Each spacer 700B is in contact with a pair of power storage cells 100 adjacent to each other in the first direction. In other words, the first spacer 701B is in contact with the first power storage cell 101 and the second power storage cell 102, and the second spacer 702B is in contact with the second power storage cell 102 and the third power storage cell 103.

The spacer 700B is different from the spacer 700 in that each spacer 700B is formed separately from the upper cover 220. In other words, each of the first spacer 701B and the second spacer 702B is formed separately from the upper cover 220.

The plurality of spacers 700B are integrally formed. In other words, the first spacer 701B and the second spacer 702B are integrally formed. The plurality of spacers 700B are fitted into the power storage stack 11 in such a manner that each spacer 700B is disposed between a pair of power storage cells 100 adjacent to each other in the first direction.

Each spacer 700B may be made of an elastic member. In other words, each of the first spacer 701B and the second spacer 702B may be made of an elastic member.

The spacer 700B is the same as the spacer 700 in the other points. Since the plurality of spacers 700B are integrally formed, the number of components constituting the power storage device 10 is reduced. Therefore, according to the power storage device 10 of the second modification, the ease of assembly of the power storage device 10 is improved.

When each spacer 700B is made of an elastic member, the power storage cell 100 adjacent to the spacer 700B is prevented from being damaged.

Although the embodiments of the present disclosure have been described in the above, it should be understood that the embodiments disclosed herein are illustrative and non-restrictive in all respects. It is intended that the scope of the present disclosure is defined by the appended claims, and encompasses all modifications equivalent in meaning and scope to the claims.

## Claims

1. A power storage device (10) comprising:
a first power storage cell (101);
a second power storage cell (102) spaced apart from the first power storage cell (101) in a predetermined direction;
a third power storage cell (103) spaced apart from the second power storage cell (102) in the predetermined direction;
a conductive member (850);
a first spacer (701, 701A, 701B) disposed between the first power storage cell (101) and the second power storage cell (102); and
a second spacer (702, 702A, 702B) disposed between the second power storage cell (102) and the third power storage cell (103),
a first terminal (121b) being provided on the side of a lower surface of the first power storage cell (101),
a second terminal (122a, 122b) being provided on the side of a lower surface of the second power storage cell (102),
a third terminal (123a) being provided on the side of a lower surface of the third power storage cell (103), and
the conductive member (850) being connected to the first terminal (121b), the second terminal (122a, 122b) and the third terminal (123a).

2. The power storage device (10) according to claim 1, further comprising:
an accommodation case (200) that includes a lower case (210) and an upper cover (220), and accommodates the first power storage cell (101), the second power storage cell (102) and the third power storage cell (103),
wherein each of the first spacer (701) and the second spacer (702) is integrally formed with the upper cover (220).

3. The power storage device (10) according to claim 1, further comprising:
an accommodation case (200) that includes a lower case (210) and an upper cover (220), and accommodates the first power storage cell (101), the second power storage cell (102) and the third power storage cell (103),
wherein each of the first spacer (701A) and the second spacer (702A) is formed separately from the upper cover 220.

4. The power storage device (10) according to claim 1, wherein
the first spacer (701B) and the second spacer (702B) are integrally formed.

5. The power storage device (10) according to claim 3 or claim 4, wherein
each of the first spacer (701A, 701B) and the second spacer (702A, 702B) is made of an elastic member.

6. The power storage device (10) according to any one of claims 1 to 4, wherein
the first spacer (701, 701A, 701B) is in contact with the first power storage cell (101) and the second power storage cell (102), and
the second spacer (702, 702A, 702B) is in contact with the second power storage cell (102) and the third power storage cell (103).

7. A vehicle (1) comprising:
the power storage device (10) according to any one of claims 1 to 4 which is mounted below a floor panel (2).
